# EUROPÄISCHE PATENTSCHRIFT

(11) **EP 0 406 171 B1**
(45) Veröffentlichungstag und Bekanntmachung des Hinweises auf die Patenterteilung: **08.03.1995**
(21) Anmeldenummer: 90810465.6
(22) Anmeldetag: 21.06.1990
(51) Int. Cl.: B29C 65/64

(54) **Verfahren und Vorrichtung zur Herstellung von Klebewalzen für Rollenwechsler von bahnverarbeitenden Maschinen insbesondere Rollenrotations-Druckmaschinen**
Method and apparatus for the fabrication of press rolls for roller exchanger of web processing machines, especially of rotary web printing presses
Procédé et dispositif pour fabriquer des rouleaux de pression pour changeurs de rouleaux sur des machines traitant des bandes, notamment des rotatives d'impression de bandes

(30) Priorität: 27.06.1989 DE 3921045
(43) Veröffentlichungstag der Anmeldung: 02.01.1991
(73) Patentinhaber: Maschinenfabrik Wifag, CH-3001 Bern (CH)
(72) Erfinder: Ammon, Ernst, CH-3012 Bern (CH); Langsch, Robert, CH-3052 Zollikofen (CH)

(56) Entgegenhaltungen:
- DE-A- 1 753 626
- DE-A- 2 219 851
- DE-A- 2 515 682
- US-A- 1 801 396

## Beschreibung

Die Erfindung betrifft ein Verfahren zur Herstellung von Klebewalzen für Rollenwechsler einer bahnverarbeitenden Maschine, insbesondere Rollenrotations-Druckmaschine, nach dem Oberbegriff des Anspruchs 1 sowie eine Vorrichtung zur Durchführung des Verfahrens.

Derartige Klebewalzen dienen in Rollenwechslern, beispielsweise für Rollenrotations-Druckmaschinen, dazu, das auslaufende Ende der verarbeiteten Papierbahn an die mit Klebstoff vorbereitete Stelle am Anfang der neuen Bahn anzudrücken, unmittelbar bevor ein Messer die ablaufende alte Bahn durchtrennt. Dieser Uebergang vom ablaufenden Ende der alten Bahn auf den Anfang der neuen Bahn erfolgt bei voller Produktionsgeschwindigkeit.

An Klebewalzen werden spezielle Anforderungen gestellt. So muss die Oberfläche der Klebewalze schaumstoffweich sein, um beim Klebvorgang, wenn also die beiden Bahnen miteinander verbunden werden, eine flächige Andruckzone zu erbringen, und nicht nur eine linienförmige. Ebenfalls muss die Klebewalze Unrundheiten und Schlagen der Bahnrolle aufnehmen können, ohne selbst ins Vibrieren zu kommen. Des weiteren muss die Klebewalze Konizitäten der Bahnrolle ausgleichen können.

Bis jetzt wurden derartige Klebewalzen durch Aufziehen eines schlauchförmigen Schaumstoffes auf ein formstabiles Tragrohr hergestellt. Da aber der Innendurchmesser des schlauchförmigen Schaumstoffes infolge grosser Toleranzen sehr unterschiedlich war, war man gezwungen, um von einer standardisierten Grösse der Tragrohre ausgehen zu können, in welche ja noch Deckel zur Aufnahme der Lagerzapfen eingelassen werden, den Aussendurchmesser der Tragrohre so zu wählen, dass er dem kleinstmöglichen Innendurchmesser des schlauchförmigen Schaumstoffes entsprach. Die Anpassung des Aussendurchmessers des Tragrohres an den Innendurchmesser des schlauchförmigen Schaumstoffes wurde durch Aufvulkanisieren einer Gummischicht auf das Tragrohr und anschliessendes Abschleifen erreicht. Die Gummischicht wurde dann mit einer Kontaktkleberschicht versehen, worauf der schlauchförmige Schaumstoff auf das Tragrohr aufgezogen wurde.

Zum Trocknenlassen musste die entstehende Klebewalze über die gesamte Oberfläche eingebunden werden, damit eine vollumfängliche Klebung erfolgen konnte.

Aus der DE A 25 15 682 sind ein Verfahren gemäß Oberbegriff des Anspruchs 1 und eine Vorrichtung gemäß oberbegriff des Anspruchs 3 zum Aufbringen elastischer Bezüge auf Walzen bekannt. Dabei wird ein in seinem Durchmesser veränderlicher Blähkörper verwendet, auf den ein Gummibezug für eine Walze aufgeschoben wird. Der Blähkörper wird anschliessend mit Druck beaufschlagt, so dass der Gummibezug in seinem Aussendurchmesser gedehnt wird. Anschliessend wird ein Tragrohr in den Gummibezug eingeschoben, wobei der Blähkörper zurückgezogen und entspannt wird. Da der Gummibezug nur einen unwesentlich geringeren Innendurchmesser hat als der Aussendurchmesser der Tragwalze, herrscht zwischen dem Gummibezug und der Tragwalze keine sonderlich feste Verbindung, so dass insbesondere bei hohen Umlaufgeschwindigkeiten der Tragwalze einschliesslich dem Gummibezug Probleme auftreten können. Andererseits kann es beim Auftragen des Gummibezuges mit diesem Verfahren grosse Probleme geben, falls der Gummibezug einen geringen Innendurchmesser hat und deshalb über den Blähkörper stark aufgeweitet werden um ihn anschliessend unter gleichzeitiger Herausziehung des Blähkörpers auf den Tragkörper aufzuschieben. Der dabei entstehende Anpressdruck zwischen dem Gummikörper und dem Tragrohr könnte zu derart hohen Reibungswiderständen führen, dass ein kontrolliertes Aufschieben des Gummikörpers ohne eine Beschädigung des Gummikörpers kaum möghlich wäre.

Der Erfindung liegt die Aufgabe zugrunde, ein Verfahren zur Herstellung von Klebewalzen zu schaffen, mit welchem auf eine einfache, zeitsparende und billige Art Klebewalzen herstellbar und womit insbesondere auf die zusätzliche Aufvulkanisation einer Gummischicht auf das Tragrohr verzichtet werden kann.

Erfindungsgemäss erfolgt die Lösung der Aufgabe durch die Merkmale in der Kennzeichnung des Anspruches 1 und 3.

Mit diesem Verfahren ist es möglich, den schlauchförmigen Schaumstoff derart auf das Tragrohr aufzuziehen, dass er vorgespannt ist. Auf eine Klebung kann demzufolge verzichtet werden.

Wird der schlauchförmige Schaumstoff trotzdem mit dem Tragrohr mit einer Klebung verbunden, ist ein Einwickeln der Klebewalze während der Aushärtung nicht erforderlich, da der schlauchförmige Schaumstoff unter Vorspannung steht.

Vorteilhafte Ausgestaltungen der Vorrichtung zur Durchführung des Verfahrens ergeben sich aus den weiteren Ansprüchen.

Sehr einfach wird die Handhabung, wenn das Stützrohr einseitig mit einem Deckel verschlossen ist, welcher mittig mit einem achsialen Gewindeloch versehen ist. In dieses Gewindeloch ist das Uebergangsstück einschraubbar. Das Tragrohr wird ebenfalls beidseitig mit Deckeln abgeschlossen, die ihrerseits zentral angeordnete, axiale Gewindelöcher aufweisen. So lässt sich das Tragrohr ebenfalls auf das Uebergangsstück aufschrauben.

Auf den dem Uebergangsstück gegenüberliegenden Deckel lässt sich ein Druckluftanschluss einschrauben. Die Druckluftzuführung erfolgt dann durch das Tragrohr in das Uebergangsstück. Durch Oeffnungen, die im Uebergangsstück vorzugsweise im Bereich der Verbindungsstelle mit dem Tragrohr angeordnet sind, strömt die Druckluft aus und bildet unter dem aufzuschiebenden schlauchförmigen Schaumstoff ein Luftkissen.

Die Erfindung wird nachfolgend anhand eines Ausführungsbeipiels näher erläutert.

Es zeigen:

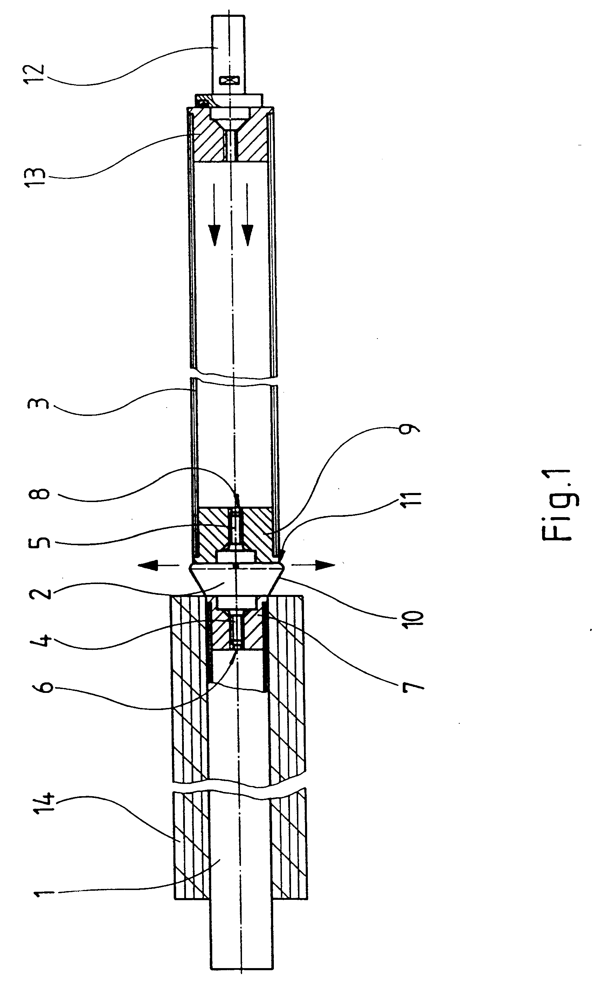

- Fig. 1: eine Ansicht der Anordnung zum Aufziehen des schlauchförmigen Schaumstoffes, welcher sich noch auf dem Stützrohr befindet
- Fig. 2: eine Ansicht der Anordnung, in welcher der schlauchförmige Schaumstoffkörper aufgezogen wird
- Fig. 3: eine Ansicht der Anordnung mit fertig aufgezogenem schlauchförmigen Schaumstoffkörper
- Fig. 4: eine Ansicht des Uebergangsstückes
- Fig. 5: eine Draufsicht auf das Uebergangsstück
- Fig. 6: eine Ansicht der fertigen Klebewalze
Wie aus Fig. 1 ersichtlich ist, werden ein Stützrohr 1, ein Uebergangsstück 2 und ein Tragrohr 3 axial miteinander verschraubt. Hierbei ist das Uebergangsstück 2 beidseitig mit je einem Gewindezapfen 4, 5 ausgerüstet.

Gewindezapfen 4 passt dabei in ein Gewindeloch 6, welches in einem Deckel 7 eingelassen ist, der das Stützrohr 1 abschliesst, während der Gewindezapfen 5 in ein Gewindeloch 8 eingeschraubt ist, das im Deckel 9 eingelassen ist, welcher das Tragrohr 3 abschliesst.

Das Uebergangsstück 2 weist eine konische Oberfläche 10 auf, die die Durchmesservergrösserung von Stützrohr 1 auf Tragrohr 3 überbrückt. Im Bereich der Verbindungsstelle 11 zwischen Uebergangsstück 2 und Tragrohr 3 strömt Druckluft aus, die über ein Druckluftanschlussstück 12, das in den Deckel 13 eingeschraubt ist, welcher das Tragrohr 3 auf der anderen Seite abschliesst, und das Tragrohr 3 zugeführt wird. Der schlauchförmige Schaumstoffkörper 14 ist auf das Stützrohr 1 aufgeschoben. Der Aussendurchmesser des Stützrohres 1 ist kleiner als der kleinste tolerierbare Innendurchmesser des schlauchförmigen Schaumstoffkörpers 14.

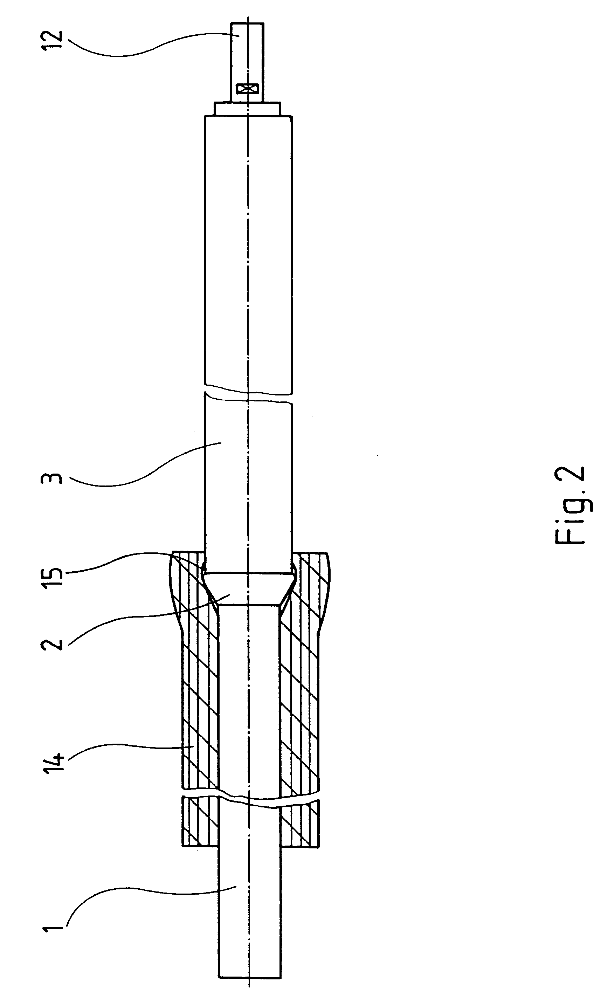

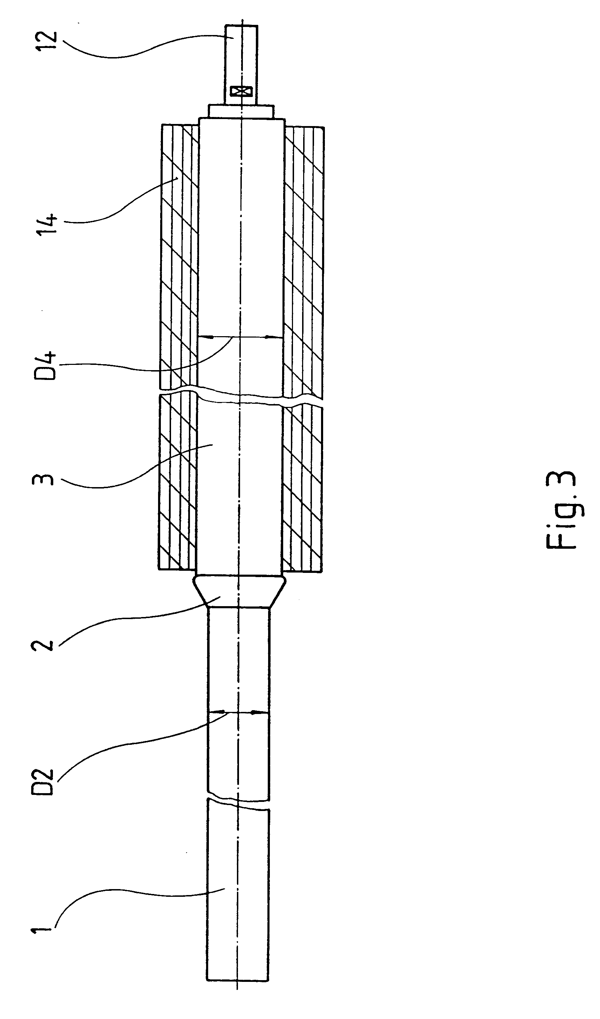

Der schlauchförmige Schaumstoffkörper 14 wird nun über die konische Oberfläche 10 des Uebergangsstückes 2 in Richtung Tragrohr 3 geschoben, wie es in Fig. 2 dargestellt ist. Sobald der Anfang des schlauchförmigen Schaumstoffkörpers 14 über die Verbindungsstelle 11 geschoben ist, bildet sich durch die ausströmende Druckluft zwischen dem schlauchförmigen Schaumstoffkörper 14 und dem Tragrohr 3 ein Luftkissen 15. Dieses Luftkissen 15 ermöglicht ein problemloses und vollständiges Aufziehen des schlauchförmigen Schaumstoffkörpers 14 auf das Tragrohr 3, wie es Fig. 3 aufzeigt. Der Aussendurchmesser des Tragrohres 3 ist hierbei grösser als der grösste tolerierbare Innendurchmesser des schlauchförmigen Schaumstoffkörpers 14, sodass der auf das Tragrohr 3 aufgezogene schlauchförmige Schaumstoffkörper 14 immer unter einer gewissen Vorspannung steht.

Normalerweise wird das Tragrohr 3 vor dem Aufziehen des schlauchförmigen Schaumstoffkörpers 14 mit einem Klebemittel beschichtet. Auch hierbei bietet das Aufziehen des schlauchförmigen Schaumstoffkörpers 14 wegen des sich aufbauenden Luftkissens 15 keine Probleme. Und da nach Ausschalten der Druckluftquelle sich der schlauchförmige Schaumstoffkörper 14 durch seine Vorspannung zusammenzieht, ist zum Aushärten des Klebemittels keine zusätzliche Einwirkung auf den Schaumstoffkörper 14 erforderlich, die Haftung wird optimal.

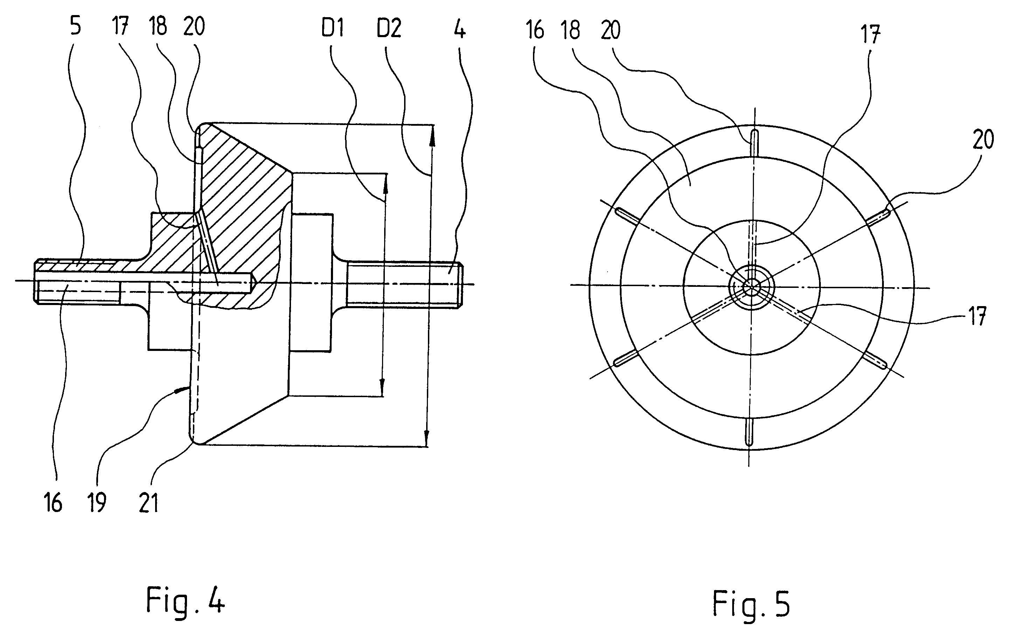

Fig. 4 und Fig. 5 zeigen das Uebergangsstück 2. Beidseitig der konischen Oberfläche 10 sind die Gewindezapfen 4 und 5 angeordnet. Der Gewindezapfen 5, der in den Deckel 9 des Tragrohres 3 eingeschraubt wird, weist im Zentrum eine axiale Bohrung 16 auf. In diese Bohrung 16 münden praktisch radial angebrachte Löcher 17, die die Bohrung 16 mit einem Ringkanal 18 verbinden. Dieser Ringkanal 18 ist in die stirnseitige Fläche 19 der konischen Oberfläche 10 mit dem grossen Durchmesser ums Zentrum eingelassen. Radial angeordnete Nuten 20 dienen als Durchlass für die Druckluft, die durch das Tragrohr 3 eingebracht wird, zum Ausströmen im Bereich der Verbindungsstelle 11 zwischen Uebergangsstück 2 und Tragrohr 3.

Die konische Oberfläche 10 weist an ihrer dicksten Stelle, die mit dem Tragrohr 3 in Verbindung kommt, einen grösseren Durchmesser auf, als das Tragrohr 3 selbst. Dieser mit einer Abrundung 21 versehene, über das Tragrohr 3 vorstehende Bereich dient quasi als Dichtung für die Druckluft, damit sie nicht in Richtung des Stützrohres 1 unter dem aufzuziehenden schlauchförmigen Schaumstoffkörper 14 wegfliessen kann.

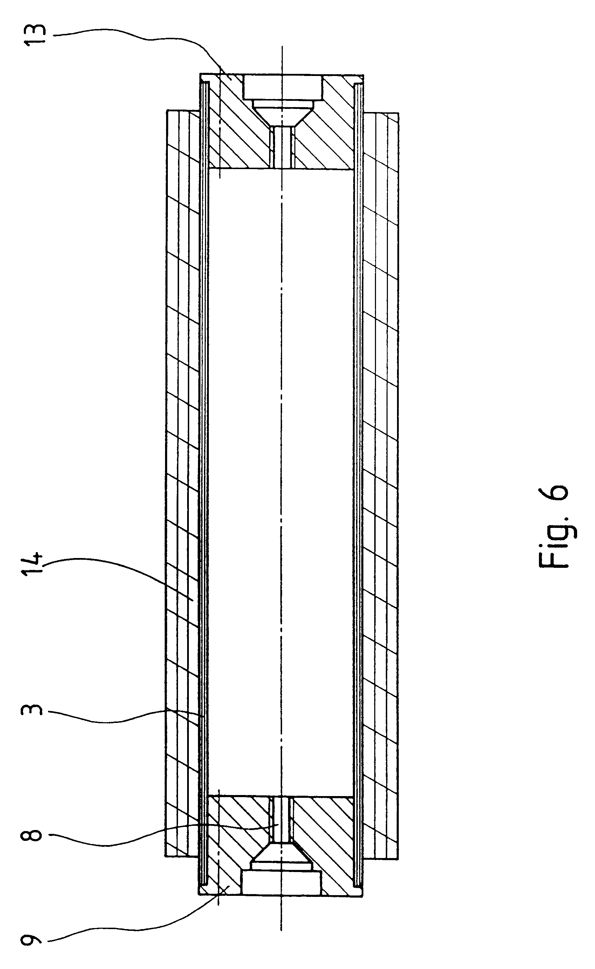

Fig. 6 zeigt die fertige Klebewalze. Als Tragrohr 3 werden handelsübliche Präzisionsrohre verwendet, die ausser Ablängen keine weiteren Arbeitsschritte erforderlich machen. Die Deckel 9 und 13 werden eingepresst. Der schlauchförmige Schaumstoffkörper 14 wird auf das gewünschte Mass abgedreht.

Das Tragrohr 3 kann aus einem praktisch beliebigen Material bestehen, das die erforderliche Festigkeit aufweist. Durch das Wegfallen der Aufvulkanisierung einer Gummischicht ist man nicht an Rohre aus Stahl gebunden.

Wie Versuche gezeigt haben, wird mit derartig hergestellten Klebewalzen eine höhere Lebensdauer erreicht, was auf den unter Vorspannung stehenden schlauchartigen Schaumstoffkörper 14 zurückzuführen ist.

## Patentansprüche

1. Verfahren zur Herstellung von Klebewalzen für Rollenwechsler von bahnverarbeitenden Maschinen, insbesondere Rollenrotations-Druckmaschinen, bestehend aus:
a) einem beidseitig mit Deckein (2) abgeschlossen formstabilen Tragrohr (3), zur Aufnahme von Lagerzapfen,
b) einem Uebergangsstück (2), dem Druckluft zugeführt wird zum Aufbauen eines Luftkissens zumindest im Bereich des Uebergangsstückes und des Tragrohres,
c) mit einem Stützte, von dem ein weichelastische, Körper (14) auf dem sich aufbauenden Luftkissen vollständig auf das Tragrohr (3) übertragen wird, wobei das Stützteil, das Uebergangsstück und das Tragrohr axial verbunden sind,
dadurch **gekennzeichnet**, dass
d) das Stützteil als formstabiles Stützrohr (3) ausgebildet wird,
e) das Uebergangsstück mit einer konische Oberfläche (10) ausgebildet wird, deren kleiner Durchmesser (D1) dem Durchmesser (D2) des Stützrohres (1) entspricht und deren grosser Durchmesser (D3) geringfügig grösser ausgebildet wird als der Durchmesser (D4) des Tragrohres,
f) der Druckluftanschluss (12) im Bereich einer Verbindungsstelle (11) zwischen dem Uebergangsstück (2) und dem Tragrohr (3), endet und daß
g) der Aussendurchmesser des Stützrohres (1) kleiner als der kleinste tolerierbare Innendurchmesser des schlauchförmigen Körpers (14) gewählt wird.

2. Verfahren nach Anspruch 1, dadurch **gekennzeichnet**, dass das Tragrohr (3) vor dem Aufschieben des schlauchförmigen Körpers (14) mit einem Klebmittell beschichtet wird.

3. Vorrichtung zur Herstellung von Klebewalzen für Rollenwechsler von bahnverarbeitenden Maschinen, insbesondere Rollenrotations-Druckmaschinen, bestehend aus:
a) einem formstabilen Tragrohr (3), welches beidseitig mit Deckein (2) abgeschlossen ist, zur Aufnahme von Lagerzapfen,
b) einem Uebergangsstück (2), dem Druckluft zugeführt wird zum Aufbauen eines Luftkissens zumindest im Bereich des Uebergangsstückes und des Tragrohres,
c) einem Stützteil, von dem der weichelastische Körper (14) auf dem sich aufbauenden Luftkissen vollständig auf das Tragrohr (3) übertragen wird, wobei das Stützteil, das Uebergangsstück und das Tragrohr axial verbunden sind,
dadurch **gekennzeichnet**, dass
d) dass das Konische Uebergangsstück (2) beidseitig axiale Gewindezapfen (4, 5) aufweist, und das Stützrohr (1) und Tragrohr (3) mindestens an einem Ende mit einem Deckel (7 bzw. 9) verschlossen ist, der je eine dem Gewindezapfen (4, 5) entsprechendes Gewindeloch (6, 8) aufweist.

4. Vorrichtung nach einem der Ansprüche 1 bis 3, dadurch **gekennzeichnet**, dass das Uebergangsstück (2) an der stirnseitigen Fläche (19) der konischen Oberfläche (10) mit dem grossen Durchmesser einen Ringkanal (18) aufweist, welcher über Löcher (17) mit einer axial im Gewindezapfen (4) angeordneten Bohrung (6) verbunden ist, und das vom Ringkanal (18) aus nutenförmige kanäle (20) radial angebracht sind.

5. Vorrichtung nach einem der Ansprüche 1 bis 4, dadurch **gekennzeichnet**, dass ein Druckluftanschlussstück (12) in den Deckel (13) des Treagrohres (3) einschraubbar ist, und dass die Druckluft durch das Tragsorr (3) in das Uebergangsstück (2) gelangt.

## Claims

1. A method for manufacturing bonding rollers for reel changers in web-processing machines, more particularly web-fed printing machines, comprising:
a) an inherently stable support tube (3) sealed at both ends with lids (2)[sic] for accommodating bearing journals,
b) a transition element (2), to which compressed air is supplied for forming an air cushion at least in the region of the transition element and the support tube,
c) with a carrier element (1), from which a soft-elastic element (14) is fully transferred to the support tube (3) on the formed air cushion, the carrier element, the transition element and the support tube being connected to one another axially,
characterised in that:
d) the carrier element is constructed as an inherently stable carrier tube (3)[sic],
e) the transition element is constructed with a conical surface (10), whose smaller diameter (D1) corresponds to the diameter (D2) of the carrier tube (1) and whose larger diameter [D3] corresponds to [the diameter] (D4) of the support tube (3),
f) the compressed air connection (12) ends in the region of a connection site (11) between the transition element (2) and the support tube (3), and
g) the external diameter of the carrier tube (1) is selected to be smaller than the smallest tolerable internal diameter of the hose-like element (14).

2. A method according to claim 1, characterised in that the support tube (3) is coated with an adhesive prior to the fitting of the hose-like element (14).

3. A device for manufacturing bonding rollers for reel changers in web-processing machines, more particularly web-fed printing machines, comprising:
a) an inherently stable support tube (3) sealed at both ends with lids (2)[sic] for accommodating bearing journals,
b) a transition element (2), to which compressed air is supplied for forming an air cushion at least in the region of the transition element and the support tube,
c) a carrier element, from which a soft-elastic element (14) is fully transferred to the support tube (3) on the formed air cushion, the carrier element, the transition element and the support tube being connected to one another axially,
characterised in that:
d) the conical transition element (2) comprises threaded journals (4, 5) at either end, and the carrier tube (1) and support tube (3) are sealed at least at one end by a lid (7 or 9) which comprise a threaded bore (6, 8) corresponding to the respective threaded journal (4, 5).

4. A device according to one of claims 1 to 3 [sic], characterised in that the transition element (2) comprises an annular duct (18) on the end face (19) of the conical surface (10) with the greater diameter, which annular duct is connected via apertures (17) to a bore (16) arranged axially in the threaded journal (4), and groove-shaped ducts (20) extend radially outwards from the annular duct (18).

5. A device according to one of claims 1 to 4, characterised in that a compressed air connection element (12) can be screwed into the lid (13) of the support tube (3) and the compressed air passes through the support tube (3) into the transition element (2).

## Revendications

1. Procédé pour fabriquer des rouleaux de collage pour des systèmes de changements de bobines de machines traitant des bandes, en particulier des presses rotatives d'imprimerie, en utilisant :
a) un tube support rigide (3) fermé à ses deux extrémités par des couvercles prévus pour recevoir des tourillons de pivotement,
b) une pièce de transition (2) agencée pour recevoir un courant d'air comprimé en vue d'établir un coussin d'air au moins à l'endroit de cette pièce de transition et sur le tube support,
c) une pièce de soutien provisoire sur laquelle on prend une gaine (14) de matière élastique et molle pour la faire glisser sur le coussin d'air établi à cet effet, et la faire passer en totalité sur le tube support (3), celui-ci étant assemblé axialement avec la pièce de transition et avec la pièce de soutien de la gaine.
caractérisé en ce que :
d) la pièce de soutien provisoire de la gaine est constituée par un tube de soutien rigide (3),
e) la pièce de transition comporte une surface conique (10), dont le petit diamètre (D1) correspond au diamètre (D2) du tube de soutien (1), et dont le grand diamètre (D4) correspond à celui du tube support (3),
f) l'arrivée de l'air comprimé (12) aboutit à l'endroit d'un raccordement (11) entre la pièce de transition (2) et le tube support (3),
g) et le diamètre extérieur du tube de soutien (1) est plus faible que le diamètre intérieur minimum admis en fabrication pour la gaine tubulaire (14).

2. Procédé selon la revendication 1, caractérisé en ce qu'on applique sur le tube support (3) une couche d'enduit adhésif, avant d'enfiler sur ce tube la gaine tubulaire (14).

3. Dispositif pour réaliser des rouleaux de collage pour des systèmes de changement de bobines de machines traitant des bandes, en particulier des presses rotatives d'imprimerie, comportant :
a) un tube support rigide (3) fermé à ses deux extrémités par des couvercles prévus pour recevoir des tourillons de pivotement,
b) une pièce de transition (2) prévue pour être alimentée en air comprimé afin de créer un coussin d'air au moins à l'endroit de cette pièce de transition et sur le tube support,
c) une pièce de soutien provisoire sur laquelle on prend la gaine (14) de matière élastique molle pour la faire passer en totalité sur le tube support (3) en la faisant glisser sur le coussin d'air créé à cet effet, la pièce de soutien, la pièce de transition et le tube support étant assemblés et alignés axialement pour cette opération,
caractérisé en ce que :
d) la pièce de transition (2) de forme conique porte sur ses deux faces latérales des doigts filetés d'assemblage (4,5) disposés axialement, et en ce que le tube de soutien (1) et le tube support (3) sont fermés chacun au moins à l'endroit de l'une de leurs extrémités par un couvercle (7,9) dans lequel est prévu un trou taraudé (6,8) pour recevoir l'un des doigts filetés d'assemblage (4,5).

4. Dispositif selon l'une des revendications 1 à 3, caractérisé en ce que la pièce de transition (2) présente sur sa face latérale (19) située du côté du grand diamètre de sa surface conique (10) un canal annulaire (18) qui communique par des trous (17) avec un alésage axial ménagé dans le doigt fileté d'assemblage (4), des rainures radiales de sortie (20) étant prévues sur le canal annulaire (18).

5. Dispositif selon l'une des revendications 1 à 4, caractérisé en ce qu'il comporte un raccord d'alimentation en air comprimé (12) pouvant se monter par vissage dans le couvercle (13) du tube support (3), afin d'envoyer de l'air comprimé dans le tube support (3) jusqu'à la pièce de transition (2).
